# EUROPEAN PATENT SPECIFICATION

(11) **EP 1 679 212 B1**
(45) Date of publication and mention of the grant of the patent: **23.07.2008**
(21) Application number: 04772482.8
(22) Date of filing: 31.08.2004
(51) Int. Cl.: B60J 5/00, B60J 10/04, B60J 10/00

(54) **SEAL STRUCTURE OF DOOR FOR AUTOMOBILE**
DICHTUNGSSTRUKTUR EINER FAHRZEUGTÜR
STRUCTURE DE JOINT DE PORTIERE D'AUTOMOBILE

(30) Priority: 30.10.2003 JP 2003370372
(43) Date of publication of application: 12.07.2006
(73) Proprietor: Daihatsu Motor Co., Ltd., Ikeda-shi, Osaka 563-8651 (JP)
(72) Inventor: IWAI, Hideto, c/o DAIHATSU MOTOR CO., LTD., Ikeda-shi, Osaka 563-0045 (JP)
(74) Representative: Grünecker, Kinkeldey, Stockmair & Schwanhäusser Anwaltssozietät
(86) International application number: PCT/JP2004/012526
(87) International publication number: WO 2005/042286

(56) References cited:
- EP-A1- 0 599 446
- EP-A1- 1 388 449
- WO-A-97/08004
- JP-A- 11 512 049
- JP-A- 58 073 423
- US-A- 5 561 003
- US-A- 5 740 640

## Description

### Technical Field

The present invention relates to a door for an automobile according to the preamble of claim 1. Such a door is known from US 5,740,640.

### Background Art

In general, a door of an automobile has a structure in which a window glass is disposed to be able to be raised or lowered between a fully opened position and a fully closed position in a glass opening of a door body made by means of hemming a door outer panel and a door inner panel, and a weather strip sealing a space between a door outer panel and the window glass is attached to an upper edge portion of the glass opening of the door outer panel.

As a structure for attaching such kind of weather strip, conventionally there is a structure in which a door reinforcement is disposed inside the door outer panel and flange portions of the both are joined to each other by spot-welding, a locking claw being formed in the flange portion of the door reinforcement by cutting and raising and a lower end portion of the weather strip being engaged to the locking claw to prevent a coming off (see Patent Document 1, for example).

Additionally, there is a structure in which an upper edge portion of a door reinforcement is sandwiched by an upper edge portion of a door outer panel by means of hemming and an end portion of the upper edge portion of the door outer panel is extended downward, to the end portion a lower end portion of a weather strip being engaged to prevent a coming off (see Patent Document 2, for example).
[Patent Document] Japanese Patent Application Laid-open No. 2000-71763
[Patent Document] Japanese Patent Application Laid-open No. 2002-283851

### Disclosure of the Invention

### Problems to be Solved by the Invention

However, in the conventional case in which the flange portions of the door outer panel and the door reinforcement are spot-welded to each other, a stress is easy to concentrate in the upper edge portion of the door panel since a front/rear side edge portions and a bottom edge portion of the door outer panel are joined to the door inner panel by means of hemming, and it is afraid that a variation in a vertical direction may be generated in a joining portion of the door outer panel and the door reinforcement, deteriorating an attachment accuracy of the weather strip.

Meanwhile, in the conventional case in which the upper edge portion of the door reinforcement is sandwiched by the door outer panel by means of hemming, the problem of variation can be prevented, but a vertical size of the weather strip tends to become large and the weather strip may undulate and incline since the structure is such that the end portion of the door outer panel is extended downward to be engaged with the lower end portion of the weather strip.

The present invention is made in view of the conventional circumstances, and an object thereof is to provide a door comprising a seal structure for an automobile capable of securing an attachment accuracy of a weather strip, and of preventing the weather strip from becoming large in size in a vertical direction and from inclining because of an undulation.

### Means for Solving the Problem

The above object is solved by providing a door according to claim 1.

### Advantageous Effect of the Invention

According to the inventive door as defined in claim 1, the upper edge portion of the door reinforcement is sandwiched by the upper edge portion of the door outer panel by means of hemming, and a claw portion to which a lower end portion of the weather strip is engaged and an extended portion which is extended to be lower than the claw portion and to which the lower end portion of the weather strip abuts are formed alternately in the forward and backward direction of the vehicle on the end portion of the upper edge portion of the door outer panel, and therefore, the weather strip is prevented from coming off by the claw portion while the movement of the lower end portion of the weather strip in the vehicle width direction can be hampered by the extended portion. Hereby, the weather strip is prevented from becoming large in size in a vertical direction and from inclining because of an undulation, and further, an attachment accuracy of the weather strip can be secured.

Further the cut-out recessed portion is formed in the part of the upper peripheral portion of the beltline reinforcement disposed to be opposed to the upper edge portion of the door outer panel, the part fronting the extended portion, and therefore, the upper edge portion of the door outer panel can be hemmed via the cut-out recessed portion, so that hemming of the door outer panel becomes possible without reducing a vertical size of the beltline reinforcement, and thereby a cross-sectional deformation or a transversal breakage of the beltline reinforcement due to an input force at a time of a vehicle collision can be prevented. That is, when a hem blade is pressed to the upper edge portion of the door outer panel from a vehicle inner side of the door body, an interference of the hem blade with the beltline reinforcement is required to be avoided. In this case, if the entire beltline reinforcement is lowered, an interference with a door component such as a regulator device may occur, and thus the vertical size of the beltline reinforcement is to be reduced, but in that case, it is afraid that a cross-sectional stiffness against the input force at the time of vehicle collision may be decreased.

### Brief Description of Drawings

Fig. 1 is a side view of an automobile to which a front door according to an embodiment of the present invention is provided;
Fig. 2 is a side view of a beltline reinforcement of the front door;
Fig. 3 is a cross-sectional view (a cross-sectional view taken along the III-III line in Fig. 2) of the front door;
Fig. 4 is a cross-sectional view (a cross-sectional view taken along the IV-IV line in Fig. 2) of the front door;
Fig. 5 is a cross-sectional view of a weather strip of the front door; and
Fig. 6 is a perspective view of a door outer panel of the front door.

### Explanation of Numerals and Symbols

- 4: front door
- 6: door outer panel
- 6a: upper edge portion
- 6c: end portion
- 6d: claw portion
- 6e: extended portion
- 7: door inner panel
- 10: door body
- 10a: glass opening
- 12: window glass
- 13: door reinforcement
- 13a: upper edge portion
- 15: beltline reinforcement
- 15c: cut-out recessed portion
- 16a, 17a: upper flange portion (upper periphery portion)
- 22: weather strip
- 23f: hook portion (lower end portion)

### Best Mode for Carrying out the Invention

Hereinafter, an embodiment of the present invention will be described based on the attached drawings.

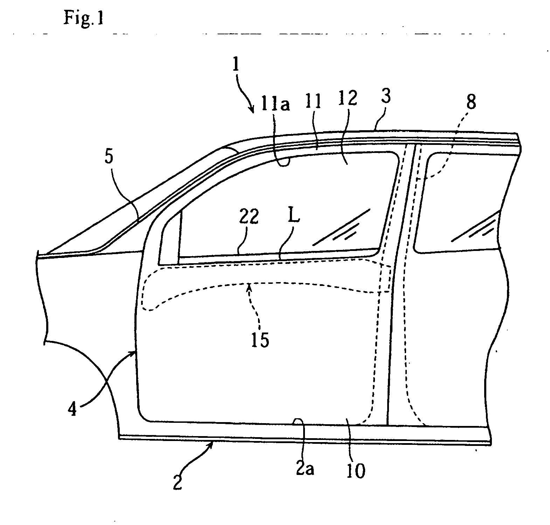

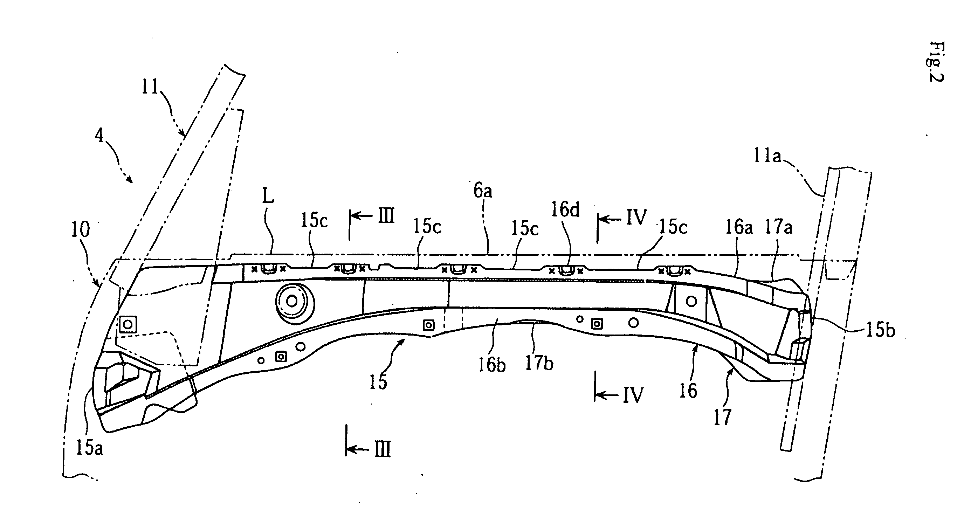

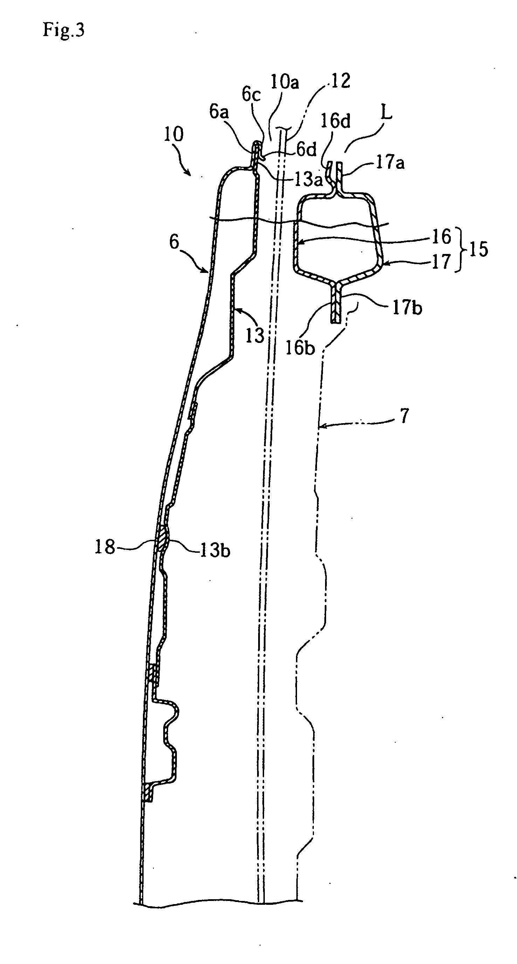

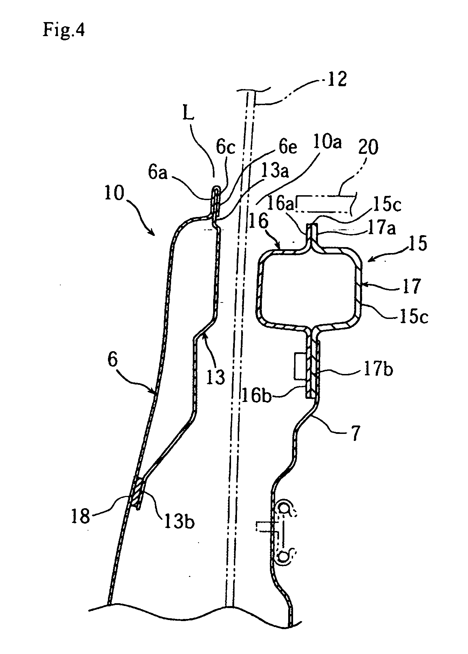

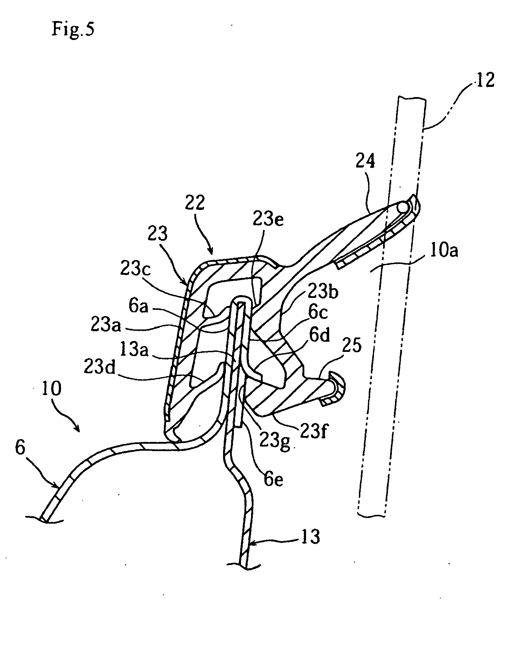

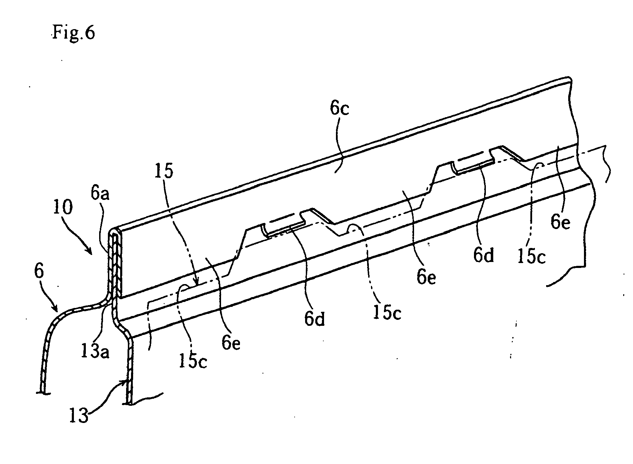

Fig. 1 to Fig. 6 are drawings for explaining a door comprising a seal structure of said door for an automobile according an embodiment of the present invention: Fig. 1 is a side view of an automobile to which a front door is provided; Fig. 2 is a side view of the front door to which a reinforcement is provided; Fig. 3 and Fig. 4 are cross-sectional views (a cross-sectional view taken along the III-III line and a cross sectional view taken along the IV-IV line in Fig. 2) of the front door; Fig. 5 is a cross-sectional view of the front door to which a weather strip is attached; and Fig. 6 is a perspective view of a door outer panel.

In the drawings, "1" denotes a vehicle side section of the automobile and a schematic structure thereof is such that a roof panel 3 is disposed at upper ends of right and left side panels 2, a floor panel (not shown) is disposed at lower ends to form a passenger compartment, and front doors 4 are disposed in front door openings 2a formed in the right and left respective side panels 2. The front door 4 is supported to be openable/closable by a front pillar 5 forming a front peripheral portion of the front door opening 2a via a pair of upper and lower door hinges (not shown), and is supported to be able to be locked by a center pillar 8 forming a rear peripheral portion of the front door opening 2a via a locking mechanism (not shown).

The front door 4 has a structure in which a window frame 11 is connected to a door body 10 to form a window opening 11a, the door body 10 being made by joining front/rear peripheral portions of the door outer panel 6 and the door inner panel 7 to each other and joining bottom peripheral portions thereof to each other by means of hemming and by forming a door glass opening 10a at an upper end, and a window glass 12 is disposed to be able to be raised and lowered in the door glass opening 10a of the door body 10. The window glass 12 is driven to be raised and lowered between a fully opened position in which the window glass 12 is lowered into the door body 12 and a fully closed position in which the window opening 11a is closed by a window regulator (not shown) disposed in the door body 10.

In the door body 10, a beltline reinforcement 15 extending along a beltline L in a forward and backward direction of the vehicle is disposed, and the beltline reinforcement 15 is fixed to the door inner panel 7.

The beltline reinforcement 15 has a structure in which a closed cross-section is formed across substantially an entire length in the forward and backward direction by joining upper flange portions 16a, 17a to each other and lower flange portions 16b, 17b to each other, of the outer reinforcement 16 with a substantial hat shape cross-section and the inner reinforcement 17 also with a substantial hat shape cross-section, by means of spot-welding. Front and rear end surfaces 15a, 15b of the beltline reinforcement 15 are opposed to the front pillar 5 and the center pillar 8. Hereby, an input force at a time of a frontal collision is transmitted to the beltline reinforcement 15 via the front pillar 5, and is transmitted from the beltline reinforcement 15 to a rear of the vehicle via the center pillar 8.

In a vehicle inner side of the door outer panel 6, a door reinforcement 13 extending along the belt line L in the forward and backward direction of the vehicle is disposed, and a closed cross-section is formed by the door reinforcement 13 and the door outer panel 6. A lower edge portion 13b of the door reinforcement 13 is fixed to the door outer panel 6 by a mastic sealer 18.

An upper edge portion 13a of the door reinforcement 13 is formed to stand substantially vertically, and the upper edge portion 13a is sandwiched by an upper edge portion 6a of the door outer panel 6 by means of hemming the upper edge portion 6a by applying pressure with a hem blade 20.

To the upper edge portion 6a of the door outer panel 6, a weather strip 22 which is made of an elastic material such as rubber and which extends across the entire length in the forward and backward direction, and by the weather strip 22, a space between the door outer panel 6 and the window glass 12 is sealed and an appearance of the front door 4 in the beltline L is enhanced.

The weather strip 22 has a schematic structure, as shown in Fig.5, in which a pair of upper and lower slide-contacting lip portions 24, 25 to slide-contact the window glass 12 are integrally formed to a body portion 23 which sandwiches the upper edge portion 6a and has a cross-section of an upside down U-shape. To inner surfaces of a vehicle outer side wall 23a and a vehicle inner side wall 23b of the body portion 23, seal lip portions 23c, 23d, 23e which respectively abut to the upper edge portion 6a and prevent water and the like from entering are integrally formed. Additionally, to a lower end portion of the vehicle inner side wall 23b, a hook portion 23f is integrally formed.

Additionally, alternately formed in the forward and backward direction of the vehicle on an end portion 6c of the upper edge portion 6a of the door outer panel 6 are a claw portion 6d to which the hook portion 23f of the weather strip 22 is engaged and an extended portion 6e formed to be extended to be lower than the claw portion 6d, to the extended portion 6e an inner end surface 23g of the hook portion 23f abuts.

The claw portion 6d is formed by being cut and raised to be located higher than an under surface of the extended portion 6e, and the weather strip 22 is prevented from coming off by the claw portion 6d. Additionally, the extended portion 6e is formed to make a substantially vertical plane along the upper edge portion 13a of the door reinforcement 13, so that a movement of the hook portion 23f to an outer side in a vehicle width direction is restricted by the extended portion 6e.

A cut-out recessed portion 15c is formed in a part of the upper flange portions 16a, 17a of the beltline reinforcement 15, the part fronting the extended portion 6e. The upper edge portion 6a of the door outer panel 6 described above can be hemmed by the hem blade 20 via the cut-out recessed portion 15c.

A recess 16d bulging in the vehicle outer side is formed in a part of the upper flange portion 16a of the outer reinforcement 16, the part being opposed to the claw portion 6d, and both adjacent parts of the recess 16d are spot-welded to the upper flange portion 17a of the inner reinforcement 17 (see a mark X in Fig. 2).

According to the present embodiment, the upper edge portion 13a of the door reinforcement 13 is sandwiched by the upper edge portion 6a of the door outer panel 6 by means of hemming, and alternately formed in the forward and backward direction of the vehicle on the end portion 6c of the upper edge portion 6a of the door outer panel 6 are the claw portion 6d to which the hook portion 23f of the weather strip 22 is engaged and the extended portion 6e to be extended to be lower than the claw portion 6d, to the extended portion 6e the inner end surface 23 g of the hook portion 23f abutting, so that the weather strip 22 is prevented from coming off by the claw portion 6d and the movement of the weather strip 22 to the outer side in the vehicle width direction can be hampered by the extended portion 6e. Hereby, the weather strip 22 is prevented from becoming large in size in a vertical direction and from inclining because of an undulation, and further, an attachment accuracy of the weather strip 22 can be secured.

In the present embodiment, the cut-out recessed portion 15c is formed in the part of the upper flange portions 16a, 17a of the beltline reinforcement 15 disposed to be opposed to the upper edge portion 6a of the door outer panel 6, the part fronting the extended portion 6e, and therefore, the upper edge portion 6a of the door outer panel 6 can be hemmed by the hem blade 20 via the cut-out recessed portion 15c, so that hemming of the door outer panel 6 becomes possible without reducing a vertical size of the beltline reinforcement 15, and thereby a cross-sectional deformation or a transversal breakage of the beltline reinforcement 15 due to an input force at a time of a vehicle collision can be prevented. That is, when the hem blade 20 is pressed from the vehicle inner side to perform hemming, an interference of the hem blade 20 with the beltline reinforcement 15 is required to be avoided. In this case, if the entire beltline reinforcement is lowered, an interference with a door component such as a regulator device may occur. Thus, the vertical size of the beltline reinforcement is to be reduced, but in that case, it is afraid that a cross-sectional stiffness against the input force at the time of vehicle collision may be decreased.

## Claims

1. A door (4) for an automobile, in which a window glass (12) is disposed to be able to be raised and lowered in a glass opening (10a) of a door body (10) formed of a door outer panel (6) and a door inner panel (7), a door reinforcement (13) is disposed in an inner side of the door outer panel (6), an upper edge portion (13a) of the door reinforcement (13) is sandwiched by an upper edge portion (6a) of the door outer panel (6) by means of hemming, and a weather strip (22) sealing a space between the door outer panel (6) and the window glass (12) is attached to the upper edge portion (6a) of the door outer panel (6), wherein a claw portion (6d) to which a lower end portion of the weather strip (22) is engaged to prevent the weather strip (22) from coming off, and an extended portion (6e) which is extended to be lower than the claw portion (6d) and to which the lower end portion of the weather strip (22) abuts to restrict a movement of the weather strip (22) in a vehicle width direction, are formed alternately in a forward and backward direction of a vehicle on an end portion (6c) of the upper edge portion (6a) of the door outer panel (6),
**characterized in that,**
said door further comprises a beltline reinforcement (15) which is disposed on the door inner panel (7) of the door body (10) in a manner to be substantially opposed to the upper edge portion (6a) of the door outer panel (6), and a cut-out recessed portion (15c) is formed in a part of an upper periphery portion of the beltline reinforcement (15), the part fronting the extended portion (6e).

## Patentansprüche

1. Tür (4) für ein Kraftfahrzeug, in der eine Fensterscheibe (12) so angeordnet ist, dass sie in einer Scheibenöffnung (10a) eines Türkörpers (10) angehoben und abgesenkt werden kann, der aus einem Tür-Außenblech (6) und einem Tür-Innenblech (7) besteht, eine Türverstärkung (13) in einer Innenseite des Tür-Außenblechs (6) angeordnet ist, ein oberer Randabschnitt (13a) der Türverstärkung (13) durch einen oberen Randabschnitt (6a) des Tür-Außenblechs (6) durch Umbiegen eingeschlossen wird, und ein Dichtungsprofil (22), das einen Raum zwischen dem Tür-Außenblech (6) und der Fensterscheibe (12) abdichtet, an dem oberen Randabschnitt (6a) des Tür-Außenblechs (6) angebracht ist, wobei ein Klauenabschnitt (6d), mit dem ein unterer Endabschnitt des Dichtungsprofils (22) in Eingriff ist, um zu verhindern, dass sich das Dichtungsprofil (22) löst, und ein verlängerter Abschnitt (6e), der so verlängert ist, dass er niedriger ist als der Klauenabschnitt (6d) und an dem der untere Endabschnitt des Dichtungsprofils (22) anliegt, um eine Bewegung des Dichtungsprofils (22) in einer Fahrzeug-Breitenrichtung einzuschränken, in einer Vorwärts-Rückwärts-Richtung eines Fahrzeugs an einem Endabschnitt (6c) des oberen Randabschnitts (6a) des Tür-Außenblechs (6) abwechselnd ausgebildet sind,
**dadurch gekennzeichnet, dass**
die Tür des Weiteren eine Gürtellinienverstärkung (15) umfasst, die an dem Tür-Innenblech (7) des Türkörpers (10) so angeordnet ist, dass sie im Wesentlichen dem oberen Randabschnitt (6a) des Tür-Außenblechs (6) gegenüberliegt, und ein ausgeschnittener vertiefter Abschnitt (15c) in einem Teil eines oberen Umfangsabschnitts der Gürtellinienverstärkung (15) ausgebildet ist, wobei der Teil den verlängerten Abschnitt (6e) verdeckt.

## Revendications

1. Portière (4) pour une automobile, dans laquelle une vitre (12) est disposée de manière à pouvoir être relevée et abaissée dans une ouverture (10a) d'un corps de portière (10) composé d'un panneau de portière extérieur (6) et d'un panneau de portière intérieur (7), un renforcement de portière (13) est disposé dans un côté intérieur du panneau extérieur (6), une partie de bord supérieure (13a) du renforcement de portière (13) est placée en sandwich, par pliage, dans une partie de bord supérieure (6a) du panneau extérieur (6), et un joint de portière (22) qui rend étanche un espace entre le panneau extérieur (6) et la vitre (12) est fixé à la partie de bord supérieure (6a) dudit panneau extérieur (6), étant précisé qu'une partie formant griffe (6d) sur laquelle une partie d'extrémité inférieure du joint (22) est enclenchée pour empêcher le joint (22) de se détacher et un prolongement (6e) qui est prévu pour arriver plus bas que ladite partie formant griffe (6d) et contre lequel la partie d'extrémité inférieure du joint (22) bute pour limiter un déplacement du joint (22) dans le sens de la largeur du véhicule sont formés en alternance vers l'avant et vers l'arrière du véhicule, sur une partie d'extrémité (6c) de la partie de bord supérieure (6a) du panneau extérieur (6),
**caractérisée en ce qu'**elle comprend également un renforcement de ligne de ceinture (15) qui est disposé sur le panneau intérieur (7) du corps de portière (10) de manière à être quasiment opposé à la partie de bord supérieure (6a) du panneau de portière extérieur (6), et une partie en retrait découpée (15c) est formée dans une partie d'une zone périphérique supérieure du renforcement de ligne de ceinture (15), la partie qui fait face au prolongement (6e).
